# EUROPEAN PATENT SPECIFICATION

(11) **EP 2 084 821 B1**
(45) Date of publication and mention of the grant of the patent: **09.05.2018**
(21) Application number: 07849153.7
(22) Date of filing: 15.11.2007
(51) Int. Cl.: H04B 5/00, H04W 76/02, H04W 88/06, H04W 92/18

(54) **NEAR FIELD COMMUNICATION (NFC) ACTIVATION**
AKTIVIERUNG VON NAHFELDKOMMUNIKATION (NFK)
ACTIVATION DE COMMUNICATION EN CHAMP PROCHE (NFC)

(30) Priority: 15.11.2006 US 859189 P
(43) Date of publication of application: 05.08.2009
(73) Proprietor: NXP B.V., 5656 AG Eindhoven (NL)
(72) Inventor: HIRSCH, Olaf, 5656 AG Eindhoven (NL); DEL PRADO, Javier, 5656 AG Eindhoven (NL); EVERAERE, Dominique, 5656 AG Eindhoven (NL)
(74) Representative: Krott, Michel
(86) International application number: PCT/IB2007/054661
(87) International publication number: WO 2008/059460

(56) References cited:
- GB-A- 2 395 626
- US-A- 6 167 094
- US-A1- 2004 203 352
- US-A1- 2006 079 180

## Description

The present invention generally relates to near field communication (NFC), and more specifically relates to the systems which needs activation in the presence of NFC devices.

Near field communication plays a vital role in today's communication world where consumers are seeking easier ways to interact with the immediate environment and to enable communication between their electronic devices. Delivering convenient wireless connectivity, NFC's intuitive operation changes the way we interact with technology, ensuring the most of the environment and reap the full benefits of total connectivity. NFC is a standards-based, short-range wireless connectivity technology that enables simple and safe two-way interactions among electronic devices, allowing users to perform contact-less transactions, access digital content and connect devices with a single touch. NFC uses electromagnetic waves in radio frequency range and transmits the information content over a short distance (a few centimeters). An example for NFC is an intelligent card reader which is capable of carrying and transmitting information from a storage means to an intelligent device or card reader.

NFC devices use radio frequency identification (RFID) tags to exchange information, and especially in personal area networks (PAN's) to identify one device to another. NFC or RFID tags are being collocated with Bluetooth devices to facilitate NFC supported "simple pairing". For example, NFC circuits help in the pairing of a Bluetooth headset with the mobile phone. Under normal circumstances it is not possible for the Bluetooth device to find out whether the collocated RFID tag is being read. If NFC is used to support the pairing procedure of a Bluetooth headset, the headset has to be put in pairing mode first before it can be paired. Often this is done by a long button press by the user. The additional user interaction removes some of the advantages to use RFID tags for the pairing procedure.

What is needed then is a mechanism to detect the NFC or RFID reader fields and switch the communication devices using RFID or NFC to appropriate modes. The present invention has been developed to meet these needs in the art.

GB 2 395 626 A describes a memory tag comprising a resonant circuit part, a memory, a detector module and an output generator module, the resonant circuit part being operable to generate an output signal in response to a signal from a reader, the amplitude of the output signal dependent on the magnitude of the signal from the reader, the detector module being responsive to the magnitude of the output signal such that, when the magnitude of the output signal is relatively low, the detector module causes the output generator module to transmit an identifier signal, and when the magnitude of the output signal is relatively high, the detector module connects the memory to the resonant circuit part.

US 2006/0079180 A1 describes methods, apparatus, systems and computer program products which provide for sensing a magnetic field, emitted by a short-range communication source, to activate short-range communication modules in a mobile terminal. In addition to sensing the magnetic field, the terminal may rely on other parameters, such as operational state of the terminal, contextual information and the like, to determine if the short-range communication module should be activated. As such, the invention reduces the overall power consumption of the terminal by limiting the active state of the short-range communication module. By conserving power the mobile terminal is capable of operating for longer periods of time without requiring charging or replacement of the power supply.

The present invention discloses a method and a system for activating a communication device in presence of a field generated by a near field communication (NFC) tag reader in a near field communication (NFC) environment. The presence of a field generated by a NFC tag reader is detected using detection circuits. Once the field is detected, the presence of the field is signaled to the communication devices associated with the NFC environment. The communication devices are then switched automatically to an appropriate mode according to the field. The method and system of the present invention removes the additional user interaction in pairing various communication devices in the NFC environment.

In an example embodiment of the present invention a method for activating a communication device in the presence of a field generated by a near field communication tag reader in a near field communication environment (NFC) is provided. The method includes the steps as defined in claim 1. The present invention automatically performs detecting, signaling and switching steps without any additional user interaction. Detecting the presence of the field includes building a resonant circuit for generating an alternate voltage in the presence of the field generated, and rectifying and averaging the alternate voltage. The resonant circuit includes an inductor and a variable capacitor coupled in parallel. The alternate voltage is rectified using a diode and averaged using a capacitor. A Zener diode in the detection circuit limits the output voltage for protecting a receiving circuit.

In another example embodiment of the present invention a system for detecting the presence of a field generated by a NFC tag reader in a near field communication environment is provided. The system includes the elements defined in claim 9.

The above summary of the present invention is not intended to represent each disclosed embodiment, or every aspect, of the present invention. Other aspects and example embodiments are provided in the figures and the detailed description that follows.

The invention may be more completely understood in consideration of the following detailed description of various embodiments of the invention in connection with the accompanying drawings, in which:
FIG. 1 is a flow diagram illustrating the method of activating a communication device in presence of a field generated by a NFC tag reader.
FIG. 2 is a circuit diagram for detecting the presence of field generated by the NFC tag reader according to an embodiment of the present invention.
FIG. 3 is a block diagram illustrating the system environment of the method and system of the present invention.

While the invention is amenable to various modifications and alternative forms, specifics thereof have been shown by way of example in the drawings and will be described in detail.

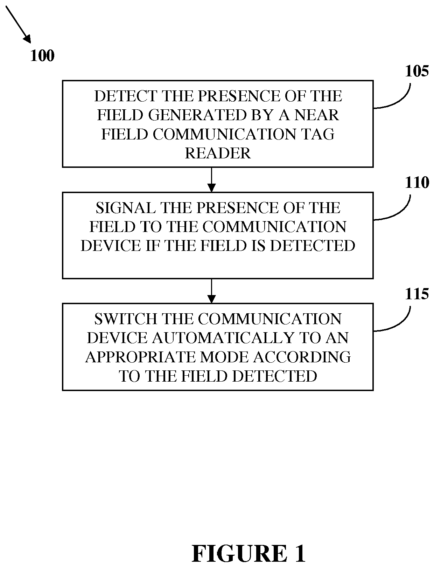

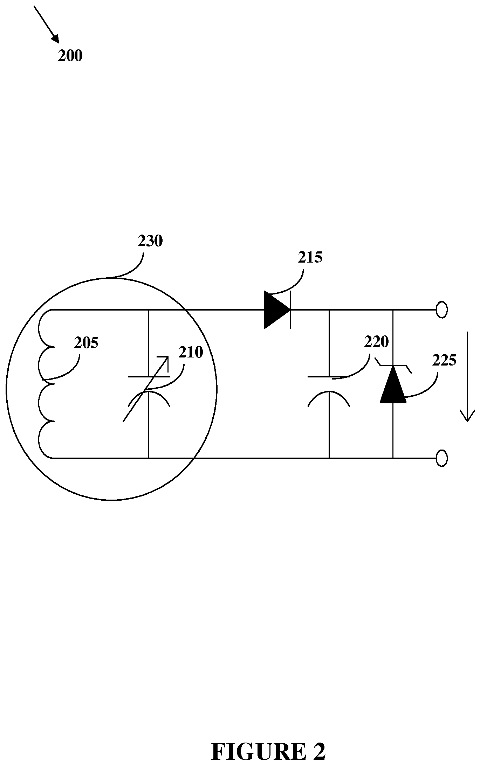

FIG. 1 is a flow diagram illustrating the method of activating a communication device in presence of a field generated by a NFC tag reader 100. A step 105, detects the presence of a field generated by a NFC or RFID tag reader. An example of a detection circuit is explained in FIG. 2. If the field is detected, a step 110 indicates the presence of the field to the associated communication devices. Another step 115 switches the communication devices into appropriate modes according to the field generated by the NFC or RFID tag readers.

Considering an example of a Bluetooth headset associated with a Bluetooth enabled mobile phone, NFC circuits help in pairing procedure of Bluetooth headset and the mobile phone. The Bluetooth headset needs to be put in to a special mode to set up the initial bonding between the mobile phone and the Bluetooth headset. The method of the present invention automatically detects and signals the field presence to the Bluetooth headset which will then be able to switch on the pairing mode. This removes the additional user interaction to switch the Bluetooth headset manually (by a long button press as in the art).

FIG. 2 is a circuit diagram for detecting the presence of field generated by the NFC tag reader according to an embodiment of the present invention 200. The circuit includes an inductor 205, a variable capacitor 210, a diode 215, a capacitor 220 and a Zener diode 225. The inductor 205 and variable capacitor 210 builds a resonant circuit 230 which generates an alternate voltage in the presence of an oscillating magnetic field. The variable capacitor 210 value is set such that the resonant circuit 230 has the same frequency as the field generated by the NFC tag reader. The diode 215 rectifies the alternate voltage and the following capacitor 220 averages it. The Zener diode 225 limits the output voltage so that the receiving circuit such as a Bluetooth device does not get damaged. This circuit may be placed in the Bluetooth devices along with the NFC or RFID circuits, which need to be switched to the appropriate modes for pairing. The aforementioned circuit diagram is one of the examples of a detection circuit. Various other detection circuits can be used to detect the presence of the field according to the method of the present invention.

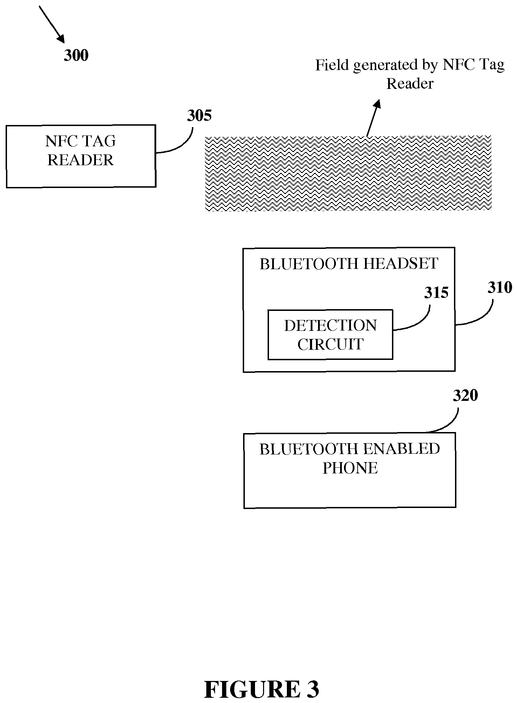

FIG. 3 is a block diagram illustrating the system environment of the method and system of the present invention 300. The figure includes a NFC tag reader 305, Bluetooth headset 310, and a Bluetooth enabled phone 320. The detection circuit 315 as explained in FIG. 2 is placed in the Bluetooth headset 310. The NFC tag reader 305 generates a field. The detection circuit 315 automatically detects and signals the field presence to the Bluetooth headset which will then be able to switch on the pairing mode.

The present invention will find its industrial applications in Bluetooth devices and also in applications other than Bluetooth where a device collocated to a RFID tag needs to be informed about the presence of a magnetic field generated by an NFC reader. The collocated device can then take appropriate actions according to the field detected.

## Claims

1. A method for activating a communication device (310) in presence of a field generated by a near field communication tag reader (305) in a near field communication environment comprising the steps of: detecting, by a detection circuit (315) comprised in the communication device (310), said presence of the field generated by said near field communication tag reader (305) automatically; signaling, by the detection circuit (315), the presence of the field to said communication device (310) if the field is detected; **characterized in that** the communication device (310) switches automatically to a pairing mode if the field is detected.

2. The method of claim 1, wherein said detecting the presence of the field comprises:
building a resonant circuit (230) for generating an alternate voltage in the presence of the field generated by the near field communication tag reader (305); and rectifying and averaging said alternate voltage.

3. The method of claim 2, wherein said resonant circuit (230) comprises an inductor (205) and a variable capacitor (210) coupled in parallel.

4. The method of claim 2, wherein the alternate voltage is rectified using a diode (215) and averaged using a capacitor (220).

5. The method of claim 2 further comprises limiting the output voltage for protecting a receiving circuit using a Zener diode (225).

6. The method of claim 2 further comprises setting the frequency of the resonant circuit 230 equal to the frequency of said magnetic field using said variable capacitor (210).

7. The method of claim 1, wherein the steps of detecting, signaling and switching are performed without user interaction, whereby the user interaction for activating the communication device is eliminated.

8. The method of claim 1, wherein said communication device (310) comprises a Bluetooth device.

9. A system for activating a communication device (310) in presence of a field generated by a near field communication tag reader (305) in a near field communication environment, said system comprising the communication device (310) and a detection circuit (315) comprised in the communication device (310), wherein the detection circuit (315) is arranged to detect said presence of the field generated by said near field communication tag reader (305) automatically; wherein the detection circuit (315) is further arranged to signal the presence of the field to said communication device (310) if the field is detected; **characterized in that** the communication device (310) is arranged to switch automatically to a pairing mode if the field is detected.

## Patentansprüche

1. Ein Verfahren zum Aktivieren einer Kommunikationsvorrichtung (310) in Präsenz von einem Feld, welches mittels eines Nahfeld Kommunikations Tag Lesers (305) generiert wird, in einer Nahfeld Kommunikationsumgebung, das Verfahren aufweisend die Schritte von:
Detektieren, mittels eines Detektionsschaltkreises (315), welcher in der Kommunikationsvorrichtung (310) enthalten ist, der Präsenz von dem Feld, welches mittels des Nahfeld Kommunikations Tag Lesers (305) automatisch generiert wird;
Signalisieren, mittels eines Detektionsschaltkreises (315), der Präsenz von dem Feld zu der Kommunikationsvorrichtung (310), wenn das Feld detektiert wird;
**dadurch gekennzeichnet, dass** die Kommunikationsvorrichtung (310) automatisch schaltet zu einem Paarungsmodus, wenn das Feld detektiert wird.

2. Das Verfahren gemäß Anspruch 1, wobei das Detektieren der Präsenz von dem Feld aufweist:
Bilden eines Schwingkreis (230) zum Generieren einer alternierenden Spannung in der Präsenz von dem Feld, welches mittels des Nahfeld Kommunikations Tag Lesers (305) generiert wird; und
Gleichrichten und Mitteln der alternierenden Spannung.

3. Das Verfahren gemäß Anspruch 2, wobei der Schwingkreis (230) einen Induktor (205) und einen variablen Kondensator (210) aufweist, welche parallel gekoppelt sind.

4. Das Verfahren gemäß Anspruch 2, wobei die alternierende Spannung gleichgerichtet ist durch Verwenden einer Diode (215) und gemittelt ist durch Verwenden eines Kondensators (220).

5. Das Verfahren gemäß Anspruch 2, ferner aufweisend
Limitieren der Ausgabespannung zum Schützen eines Empfangsschaltkreises durch Verwenden einer Zenerdiode (225).

6. Das Verfahren gemäß Anspruch 2, ferner aufweisend
Einstellen der Frequenz des Schwingkreises (230) gleich zu der Frequenz von dem magnetischen Feld unter Verwenden des variablen Kondensators (210).

7. Das Verfahren gemäß Anspruch 1, wobei die Schritte des Detektierens, Signalisierens und Schaltens ohne Benutzerinteraktion ausgeführt werden, wodurch die Benutzerinteraktion zum Aktivieren der Kommunikationsvorrichtung eliminiert wird.

8. Das Verfahren gemäß Anspruch 1, wobei die Kommunikationsvorrichtung (310) aufweist eine Bluetooth Vorrichtung.

9. Ein System zum Aktivieren einer Kommunikationsvorrichtung (310) in Präsenz von einem Feld, welches generiert wird mittels eines Nahfeld Kommunikations Tag Lesers (305) in einer Nahfeld Kommunikationsumgebung, wobei das System die Kommunikationsvorrichtung (310) aufweist und ein Detektionsschaltkreis (315) enthalten ist in der Kommunikationsvorrichtung (310), wobei der Detektionsschaltkreis (315) eingerichtet ist zum Detektieren der Präsenz von dem Feld, welches automatisch generiert wird mittels des Nahfeld Kommunikations Tag Lesers (305);
wobei der Detektionsschaltkreis (315) ferner eingerichtet ist zum Signalisieren der Präsenz von dem Feld zu der Kommunikationsvorrichtung (310), wenn das Feld detektiert wird; **dadurch gekennzeichnet, dass** die Kommunikationsvorrichtung (310) eingerichtet ist zum automatischen Schalten zu einem Paarungsmodus, wenn das Feld detektiert wird.

## Revendications

1. Procédé d'activation d'un dispositif de communication (310) en présence d'un champ généré par un lecteur d'étiquettes de communication en champ proche (305) dans un environnement de communication en champ proche comprenant les étapes suivantes : détecter, par un circuit de détection (315) compris dans le dispositif de communication (310), ladite présence du champ généré par ledit lecteur d'étiquettes de communication en champ proche (305) automatiquement ; signaler, par le circuit de détection (315), la présence du champ audit dispositif de communication (310) si le champ est détecté ;
**caractérisé en ce que** le dispositif de communication (310) passe automatiquement en mode d'appariement si le champ est détecté.

2. Procédé selon la revendication 1, dans lequel ladite détection de la présence du champ comprend les étapes suivantes : construire un circuit résonnant (230) pour générer une tension alternative en présence du champ généré par le lecteur d'étiquettes de communication en champ proche (305) ; et redresser et moyenner ladite tension alternative.

3. Procédé selon la revendication 2, dans lequel ledit circuit résonnant (230) comprend un inducteur (205) et un condensateur variable (210) couplés en parallèle.

4. Procédé selon la revendication 2, dans lequel la tension alternative est redressée au moyen d'une diode (215) et moyennée au moyen d'un condensateur (220).

5. Procédé selon la revendication 2, comprenant en outre de limiter la tension de sortie pour protéger un circuit de réception au moyen d'une diode Zener (225).

6. Procédé selon la revendication 2, comprenant en outre de définir la fréquence du circuit résonnant (230) à une valeur égale à celle de la fréquence dudit champ magnétique au moyen dudit condensateur variable (210).

7. Procédé selon la revendication 1, dans lequel les étapes de détection, de signalisation et de commutation sont exécutées sans interaction de l'utilisateur, moyennant quoi toute interaction de l'utilisateur pour activer le dispositif de communication est éliminée.

8. Procédé selon la revendication 1, dans lequel ledit dispositif de communication (310) comprend un dispositif Bluetooth.

9. Système pour activer un dispositif de communication (310) en présence d'un champ généré par un lecteur d'étiquettes de communication en champ proche (305) dans un environnement de communication en champ proche, ledit système comprenant le dispositif de communication (310) et un circuit de détection (315) compris dans le dispositif de communication (310), où le circuit de détection (315) est arrangé pour détecter ladite présence du champ généré par ledit lecteur d'étiquettes de communication en champ proche (305) automatiquement ; où le circuit de détection (315) est en outre arrangé pour signaler la présence du champ audit dispositif de communication (310) si le champ est détecté ; **caractérisé en ce que** le dispositif de communication (310) est arrangé pour passer automatiquement en mode d'appariement si le champ est détecté.
